# EUROPÄISCHE PATENTANMELDUNG

(11) **EP 2 573 486 A2**
(43) Veröffentlichungstag der Anmeldung: **27.03.2013**
(21) Anmeldenummer: 12180791.1
(22) Anmeldetag: 17.08.2012
(51) Int. Cl.: F24J 2/52

(54) **Klemmelement für ein Befestigungssystem für plattenförmige Elemente, Befestigungssystem, das ein derartiges Klemmelement umfasst, sowie dessen Verwendung**

(30) Priorität: 20.09.2011 DE 102011053774
(71) Anmelder: REHAU AG + Co, 95111 Rehau (DE)
(72) Erfinder: Späte, Frank, 91052 Erlangen (DE); Kruse, Olaf, 91301 Forchheim (DE); Schork, Rainer, 91330 Bammersdorf (DE)
(74) Vertreter: Glaser, Horst

(57) **Zusammenfassung**

Die vorliegende Erfindung betrifft ein Klemmelement (1) für ein Befestigungssystem für plattenförmige Elemente (10, 10'), insbesondere Solarmodule wie Photovoltaik-Module und Solarthermie-Kollektoren, auf einer Unterkonstruktion aus einem U-förmigen Profil mit einer Grundfläche (2) und zwei Stegen (3, 3'), wobei die Stege (3, 3') an ihrem von der Grundfläche (2) entfernten Ende zur Innenseite weisende Eingriffelemente (4, 4') aufweisen und an die Grundfläche an zwei einander gegenüberliegenden Enden Klemmmittel (5, 5') angeordnet sind. Darüber hinaus betrifft die vorliegende Erfindung auch ein Befestigungssystem für plattenförmige Elemente (10, 10'), wobei die plattenförmigen Elemente (10, 10') an zumindest zwei parallelen Seitenrändern jeweils eine Aufnahmenut (11, 11') aufweisen, auf einer Unterkonstruktion, wobei das Befestigungssystem mindestens eine Halteschiene (8) mit rhombischem, vorzugsweise rechteckigem Querschnitt, wobei die Halteschienen (8) auf zwei parallelen Seiten jeweils mindestens eine Nut (9, 9') aufweisen, und mindestens ein erfindungsgemäßes Klemmelement (1) umfasst, wobei das Klemmelement (1) zwischen zwei plattenförmigen Elementen (10, 10') angeordnet ist, das U-förmige Profil des Klemmelements (1) die Halteschiene (8) derart umgreift, dass die Grundfläche (2) über einer Seite der Halteschiene (8) angeordnet ist und das Klemmelement (1) und die Eingriffelemente (4, 4') jeweils in mindestens eine der Nuten (9, 9') der Halteschiene (8) eingreifen, und wobei die Klemmmittel (5, 5') des Klemmelements (1) jeweils in eine Aufnahmenut (11, 11') eines plattenförmigen Elements (10, 10') aufgenommen sind. Letztlich betrifft die vorliegende Erfindung auch die Verwendung des erfindungsgemäßen Klemmelements (1) als Verbindungselement zwischen zwei benachbart angeordneten Halteschienen (8).

## Beschreibung

Die vorliegende Erfindung bezieht sich auf ein Klemmelement für ein Befestigungssystem für plattenförmige Elemente, insbesondere Solarmodule wie Photovoltaik-Module und Solarthermie-Kollektoren, auf einer Unterkonstruktion sowie auf einem Befestigungssystem für plattenförmige Elemente, das mindestens ein erfindungsgemäßes Klemmelement umfasst, sowie die Verwendung eines derartigen Klemmelements als Verbindungselement zwischen zwei benachbarten Halteleisten des Befestigungssystems.

Zur Befestigung bzw. Montage von plattenförmigen Modulen wie Photovoltaik-Modulen oder Solarthermie-Kollektoren auf einer Unterkonstruktion ist im Stand der Technik eine Reihe von Lösungen bekannt. In der Regel werden die plattenförmigen Elemente auf so genannten Trage- bzw. Halteschienen montiert bzw. befestigt. Bei derartigen Halteschienen handelt es sich um in der Regel um Strangpressprofile vorzugsweise aus Aluminium. Die Befestigung der plattenförmigen Elemente an den Trageschienen erfolgt dann beispielsweise unter Verwendung von Klemmteilen, die beispielsweise durch Verschrauben mit der Trageschiene verbunden werden müssen. Dabei erfordert die Befestigung der Klemmteile an der Trageschiene mittels Schrauben, Unterlegscheiben und SechskantMuttern den Einsatz von Werkzeug unter schwierigen Montagebedingungen auf der Unterkonstruktion, beispielsweise auf dem Dach eines Hauses oder auf einem entsprechenden Gestell. Einen großen Nachteil stellt in diesem Zusammenhang das Handling von mehreren kleinen Einzelteilen während des Arbeitens auf der Unterkonstruktion dar. Dabei besteht beispielsweise die Gefahr, dass derartige Einzelteile herabfallen und sich dadurch die Montagezeit verlängert.

Vor diesem Hintergrund liegt die Aufgabe der vorliegenden Erfindung in der Bereitstellung eines Klemmelements, das die Nachteile des Stands der Technik überwindet. Insbesondere soll das erfindungsgemäße Klemmelement ohne den Einsatz eines Werkzeugs an der Halteschiene befestigt werden können und dazu in der Lage sein, die durch Windsogkräfte auf die plattenförmigen Elemente einwirkenden, abhebenden Kräfte bzw. Lasten aufzunehmen. Darüber hinaus soll das erfindungsgemäße Klemmelement einfach und kostengünstig herstellbar sein. Weiterhin liegt die vorliegende Erfindung in der Bereitstellung eines Befestigungssystems für plattenförmige Elemente, in dem das erfindungsgemäße Klemmelement zum Einsatz kommt.

Erfindungsgemäß werden diese und andere Aufgaben durch ein Klemmelement mit den Merkmalen des Patentanspruchs 1 bzw. durch ein Befestigungssystem für plattenförmige Elemente mit den Merkmalen des Patentanspruchs 6 gelöst.

Bevorzugte Ausführungsformen der vorliegenden Erfindung sind in den jeweils davon abhängigen Ansprüchen beschrieben.

Damit liegt die vorliegende Erfindung in der Bereitstellung eines Klemmelement für ein Befestigungssystem für plattenförmige Elemente, insbesondere Solarmodule wie Photovoltaik-Module und Solarthermie-Kollektoren, auf einer Unterkonstruktion aus einem U-förmigen Profil mit einer Grundfläche und zwei Stegen, wobei die Stege an ihrem von der Grundfläche entfernten Ende zur Innenseite weisende Eingriffelemente aufweisen und an die Grundfläche an zwei einander in Längsrichtung gegenüberliegenden Enden Klemmmittel angeformt sind.

Darüber hinaus liegt die vorliegende Erfindung in der Bereitstellung eines Befestigungssystem für plattenförmige Elemente, insbesondere Solarmodule wie Photovoltaik-Module und Solarthermie-Kollektoren, wobei die plattenförmigen Elemente an zumindest zwei parallelen Seitenrändern jeweils eine Aufnahmenut aufweisen, auf einer Unterkonstruktion, wobei das Befestigungssystem Folgendes umfasst:
(i) mindestens eine Halteschiene mit rhombischem, vorzugsweise rechteckigem Querschnitt, wobei die Halteschienen auf zwei parallelen Seiten jeweils mindestens eine Nut aufweisen; und
(ii) mindestens ein Klemmelement nach einem der vorangehenden Ansprüche, wobei das Klemmelement zwischen zwei plattenförmigen Elementen angeordnet ist, das U-förmige Profil des Klemmelements die Halteschiene derart umgreift, dass die Grundfläche über einer Seite der Halteschiene angeordnet ist und das Klemmelement und die Eingriffelemente jeweils mindestens eine der Nuten der Halteschiene eingreifen, und wobei die Klemmmittel des Klemmelements jeweils in eine Aufnahmenut eines plattenförmigen Elements aufgenommen sind.

Der Begriff "U-förmiges Profil", wie er hierin verwendet wird, bezeichnet ein Hohlprofil mit offener Oberseite, zwei parallelen Längsseiten (Stege) und einer die Längsseiten verbindenden Bodenseite (Grundfläche). Die Verbindungen zwischen den Stegen und der Grundfläche können dabei eckig oder abgerundet ausgeführt sein. In Bezug auf das erfindungsgemäße Klemmelement bedeutet der Begriff "Innenseite", wie er hierin verwendet wird, die Seite des Klemmelements, die durch die Stege und die Grundfläche eingeschlossen wird.

Gemäß der vorliegenden Erfindung wurde erkannt, dass die der Erfindung zugrundeliegenden Aufgaben durch ein Klemmelement gelöst werden können, das aus einem U-förmigen Profil mit einer Grundfläche und zwei daran vorzugsweise einstückig angeformten Stegen mit jeweils einem daran angeformten, zur Innenseite weisenden Eingriffelement sowie Klemmmitteln, die an die Grundfläche an zwei einander in Längsrichtung des Klemmelements gegenüberliegenden Enden angeordnet sind, gebildet wird. Bei Verwendung einer Halteschiene mit rhombischem, vorzugsweise rechteckigem Querschnitt, wobei die Halteschiene an zwei parallelen Seiten jeweils mindestens eine Nut aufweist, kann das U-förmige Profil des Klemmelements die Halteschiene derart umgreifen, dass die Grundfläche über einer Seite der Halteschiene, eine von den Seiten mit Nut eingeschlossene Seite, angeordnet ist und die beiden Eingriffelemente jeweils in eine der Nut der Halteschiene eingreifen. Dadurch kann das Klemmelement ohne Einsatz eines Werkzeugs auf die Halteschiene aufgeschoben oder aufgeclipst werden, was insbesondere bei Anlagen mit einer Vielzahl von plattenförmigen Elementen die Montagezeit erheblich verkürzt und dadurch Montagekosten eingespart. Das erfindungsgemäße Klemmelement kann dann beliebig entlang der Halteschiene verschoben werden. An den beiden Enden des Klemmelements befinden sich jeweils Klemmmittel, die in eine entsprechende Aufnahmenut am Rahmen zweier nebeneinander angeordneter plattenförmiger Elemente eingeführt werden können. Dabei ist das Klemmelement derart zwischen zwei benachbarten plattenförmigen Elementen positioniert, dass die Klemmmittel jeweils in die seitlichen Aufnahmenuten der plattenförmigen Elemente eingeführt sind. Dadurch wird ein Formschluss zwischen der Halteschiene und dem Klemmelement einerseits sowie zwischen dem Klemmelement und dem plattenförmigen Element andererseits hergestellt, durch den die auf die plattenförmigen Elemente einwirkenden abhebenden Lasten, die durch Windsogkräfte erzeugt werden, sicher aufgenommen werden können, wodurch der Kollektor auf der Halteschiene fixiert wird. Bevorzugte Ausführungsformen der vorliegenden Erfindung sind in den jeweils davon abhängigen Ansprüchen beschrieben.

In Bezug auf das erfindungsgemäße Klemmelement kann es hilfreich sein, wenn an den Innenseiten der Stege jeweils mindestens ein Abstandselement angeordnet ist. Durch den Einsatz derartiger Abstandselemente wird ein stabiler Sitz des Klemmelements auf der Halteschiene ermöglicht. Derartige Abstandselemente können eine beliebige Form aufweisen, wobei ein runder, dreieckiger oder viereckiger Querschnitt bevorzugt ist. Ebenso ist es möglich, weitere Abstandselemente an der den Stegen zugewandten Seite der Grundfläche anzuordnen. Derartige weitere Abstandselemente tragen zusätzlich zu einem festen Sitz des Klemmelements auf der Halteschiene sowie zu dessen Verschiebbarkeit entlang der Halteschiene bei. Sowohl die Abstandselemente als auch die weiteren Abstandselemente können sich dabei abschnittsweise in Längsrichtung des erfindungsgemäßen Klemmelements oder durchgehend über die gesamte Länge des erfindungsgemäßen Klemmelements erstrecken.

Es kann auch von Nutzen sein, wenn die Klemmmittel an der Innenseite hinsichtlich der Dicke verjüngend ausgebildet sind. Durch eine derartige Ausbildung der Klemmmittel lassen sich die Klemmmittel leichter in die jeweiligen Aufnahmenuten eines plattenförmigen Elements einführen, ohne das die Haltewirkung des Klemmmittels auf das jeweilige plattenförmige Element negativ beeinflusst wird.

Es kann auch vorteilhaft sein, wenn die Klemmmittel eine zumindest teilweise profilierte Oberfläche aufweisen. Insbesondere wenn die Aufnahmenuten der plattenförmigen Elemente an entsprechenden Stellen ebenfalls eine profilierte Oberfläche aufweisen, wird der Formschluss verbessert.

Es kann sich auch als günstig erweisen, wenn es sich bei dem Klemmelement um ein metallisches Bauteil oder ein Kunststoff-Bauteil handelt. Derartige metallische Bauteile oder Kunststoff-Bauteile begünstigen die Stabilität des Klemmelements, indem sie eine ausreichende Starrheit der Verbindung zur Halteschiene gewährleisten. Darüber hinaus können sie kostengünstig, beispielsweise durch Strangpressen und anschließendes Ausklinken, beispielsweise Aussägen oder Ausstanzen, oder mittels Spritzguss, hergestellt werden. Dabei haben sich insbesondere Aluminium, Edelstahl, eine Aluminium-Druckgusslegierung, eine Zink-Druckgusslegierung sowie eine Aluminium-Zink-Druckgusslegierung, Acrylnitril-Styrol-Acrylester (ASA), Polyamid (PA), Polyoxymethylen (POM) oder faserverstärkte Polymere, insbesondere glasfaserverstärkte Polymere als besonders geeignete Materialien erwiesen. Dabei ist es bevorzugt, dass es sich bei dem Klemmelement um ein Bauteil aus Aluminium handelt.

Es liegt auch im Umfang der vorliegenden Erfindung, das erfindungsgemäße Klemmelement als Verbindungselement zwischen zwei benachbart angeordneten Halteschienen einzusetzen.

Im Folgenden wird die vorliegende Erfindung in Bezug auf die beigefügten Zeichnungen dargestellte bevorzugte Ausführungsform im Detail erläutert.

### Kurze Beschreibung der Figuren

- Fig. 1: zeigt eine perspektivische Darstellung einer Ausführungsform eines erfindungsgemäßen Klemmelements.
- Fig.2: zeigt das in Fig. 1 gezeigte, auf eine Halteschiene aufgebrachte erfindungsgemäße Klemmelement als Querschnittsdarstellung.
- Fig. 3: zeigt eine Ausführungsform eines erfindungsgemäßen Befestigungssystems mit Halteschiene und darauf aufgebrachtem Klemmelement, das zwischen zwei (schematisch dargestellten) plattenförmigen Elementen angeordnet ist, als perspektivische Darstellung.
- Fig. 4: zeigt eine Seitenansicht des in Fig. 3 dargestellten erfindungsgemäßen Befestigungssystems mit zwei plattenförmigen Elementen.

### Detaillierte Beschreibung bevorzugter Ausführungsformen

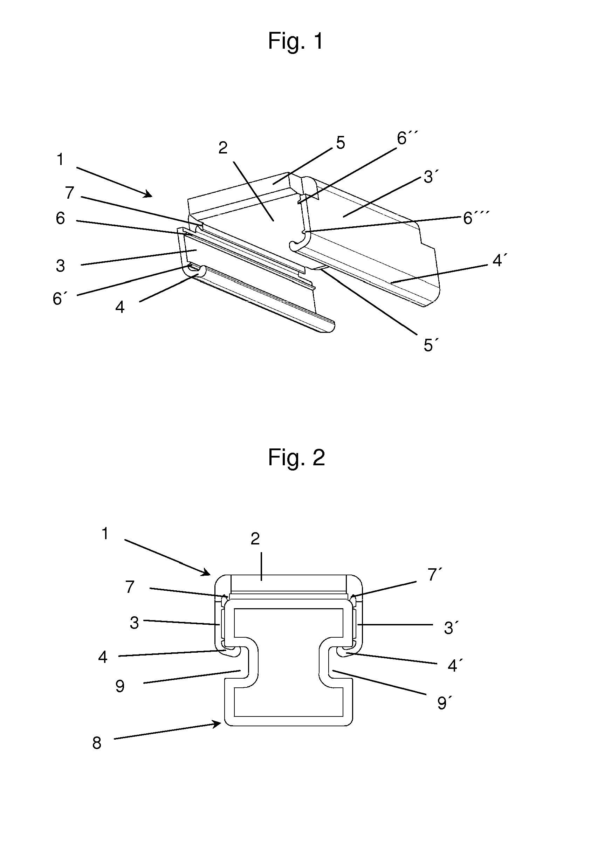

In Fig. 1 ist eine Ausführungsform eines erfindungsgemäßen Klemmelements 1 gezeigt. Das erfindungsgemäße Klemmelement 1 ist aus einem U-förmigen Profil mit einer Grundfläche 2 und zwei daran angeformten Stegen 3, 3' aufgebaut. Die Stege 3, 3' erstrecken sich dabei entlang zweier gegenüberliegender Seiten der Grundfläche 2 und zeigen auf dieselbe Seite der Grundplatte 2, die auch als Innenseite bezeichnet werden soll. Die Stege 3, 3' können sich abschnittsweise entlang der Grundplatte oder über die gesamte Länge der Grundplatte 2 erstrecken. In der in Fig. 1 gezeigten Ausführungsform ragen die Stege 3,3' in Längsrichtung über die Grundplatte 2 hinaus. An den Enden der Stege 3, 3' ist jeweils ein zur Innenseite des Klemmelements 1 weisendes Eingriffelement 4, 4' angeordnet. In der in Fig. 1 dargestellten Ausführungsform sind die Eingriffelemente 4, 4' in einem Winkel von etwa 110° an die Stege angeformt. In alternativen Ausführungsformen sind jedoch andere Winkel von etwa 80° bis etwa 140° realisiert, wobei Winkel von 90° bis 120 ° bevorzugt sind. An der Innenseite der Stege 3, 3' ist jeweils ein Paar von Abstandselementen 6, 6', 6", 6''' angeordnet, die sich jeweils über die gesamte Länge des Klemmelements 1 erstrecken und zur Innenseite des Klemmelements 1 zeigen. In der in Fig. 1 dargestellten Ausführungsform des erfindungsgemäßen Klemmelements 1 weisen die Abstandselemente 6, 6', 6", 6''' einen dreieckigen Querschnitt auf. An der Grundfläche 2 sind weitere Abstandselemente 7, 7' angeformt, die ebenfalls zur Innenseite des Klemmelements 1 weisen und sich ebenfalls über dessen gesamte Länge erstrecken. In Längsrichtung sind an den Enden der Grundfläche 2 Klemmmittel 5, 5' angeordnet. Diese Klemmmittel 5, 5' besitzen vorzugsweise einen rechtwinkligen Querschnitt, wobei sie die Grundfläche 2 des erfindungsgemäßen Klemmelements 1 in Längsrichtung fortsetzen, jedoch in Querrichtung des erfindungsgemäßen Klemmelements 1 eine geringere Ausdehnung als die Grundfläche besitzen können. An der zur Innenseite des Klemmelements 1 angeordneten Seite sind die Klemmmittel 5, 5' sich verjüngend ausgebildet, d. h., ihre Dicke nimmt mit zunehmenden Abstand von der Grundfläche ab. Zusätzlich oder alternativ dazu können Aufnahmenuten 11, 11' der Halteschiene 8 in Keilform ausgebildet sein.

Eine Anordnung, in der das in Fig. 1 dargestellte erfindungsgemäße Klemmelement 1 auf eine Halteschiene 8 aufgebracht ist, ist in Fig. 2 dargestellt.

Die Halteschiene 8 besitzt dabei einen rhombischen, in der in der Fig. 2 gezeigten Ausführungsform rechtwinkligen Querschnitt, wobei die Ecken der Halteschiene 8 an der Außenseite abgerundet sind. An zwei gegenüberliegenden Seiten besitzt die Halteschiene 8 Nuten 9, 9', die sich über die gesamte Länge der Halteschiene 8 erstrecken. Zum Aufbringen des Klemmelements 1 auf die Halteschiene 8 wird ein Eingriffselement 4 bzw. 4' in eine Nut 9 bzw. 9' eingesetzt und das Klemmelement 1 soweit über die Halteschiene 8 geführt, bis das gegenüberliegende Eingriffelement 4' bzw. 4 in die gegenüberliegende Nut 9' bzw. 9 einrastet, wobei das Klemmelement 1 auf die erfindungsgemäß verwendete Halteschiene 8 aufgeclipst wird. Alternativ dazu können die Eingriffelemente 4, 4' an einem Ende der Halteschiene 8 in die jeweilige Nut 9, 9' eingeführt und das Klemmelement 1 dann auf die Halteschiene 8 aufgeschoben werden.

Im aufgeclipsten bzw. aufgeschobenen Zustand liegt die Grundfläche 2 des erfindungsgemäßen Klemmelements 1 oberhalb einer nutfreien Seite der Halteschiene 8, wobei die Eingriffelemente 4, 4' in die entsprechenden Nuten 9, 9' der Halteschiene 8 eingreifen und so das erfindungsgemäße Klemmelement 1 in Längsrichtung der Halteschiene 8 verschiebbar an dieser halten. Die Abstandselemente 6, 6', 6", 6''' sowie die weiteren Abstandselemente 7, 7' gewährleisten dabei einen stabilen Abstand zwischen erfindungsgemäßem Klemmelement 1 und Halteschiene 8.

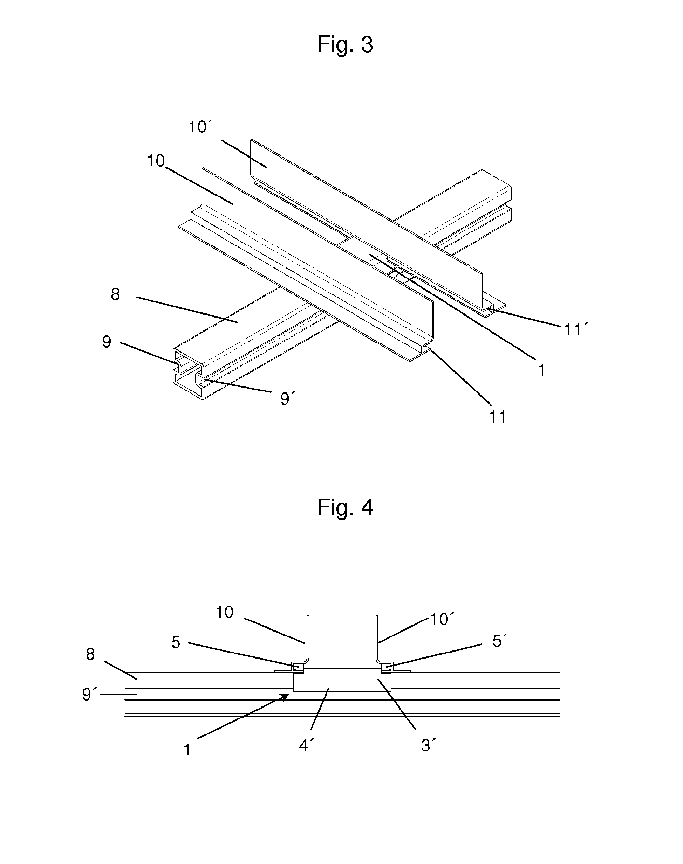

Die in Fig. 2 im Querschnitt dargestellte Anordnung ist zusammen mit zwei schematisch durch einen Abschnitt ihres Randprofils dargestellten plattenförmigen Elementen 10, 10' in einer perspektivischen Ansicht in Fig. 3 gezeigt. Die plattenförmigen Elemente 10, 10' sind benachbart parallel zueinander angeordnet und liegen auf der Halteschiene 8 auf. Zwischen ihnen befindet sich das erfindungsgemäße Klemmelement 1, das, wie in Fig. 2 dargestellt, über die Eingriffelemente 4, 4' und den entsprechenden Nuten 9, 9' mit der Halteschiene 8 verbunden ist. Zumindest an zwei parallelen Seiten weisen die plattenförmigen Elemente 10, 10' Aufnahmenuten 11, 11' auf.

Die in Fig. 3 dargestellte Anordnung aus dem erfindungsgemäßen Klemmelement 1, Halteschiene 8 und zwei benachbarten, plattenförmigen Elementen 10, 10' ist in Fig. 4 in einer Seitenansicht dargestellt. Daraus geht hervor, dass die plattenförmigen Elemente 10, 10' mit ihrer Unterseite auf den Halteschienen 8 aufliegen. Die zueinander benachbarten plattenförmigen Elemente 10, 10' werden durch das dazwischen angeordnete erfindungsgemäße Klemmelement 1 auf Abstand zueinander gehalten. Dabei sind die Klemmmittel 5, 5' in die jeweiligen Aufnahmenuten 11, 11' des Rahmens der plattenförmigen Elemente 10, 10' eingeführt, so dass ein Formschluss gebildet wird. In bevorzugten Ausführungsformen des erfindungsgemäßen Klemmelements 1 ist in die Klemmmittel 5, 5' in Querrichtung mindestens ein Schlitz eingebracht und/oder auf der Innenseite 2 und/oder der Außenseite des erfindungsgemäßen Klemmmittels 1 sind im Bereich der Klemmmittel 5, 5' Federmittel angeordnet. Durch derartige Maßnahmen wird der Formschluss zwischen Klemmmitteln 5, 5' und Aufnahmenuten 11, 11' verbessert. Aus dem gleichen Grund können auch die Aufnahmenuten 11, 11' und oder die Klemmmittel 5, 5' eine zumindest teilweise profilierte Oberfläche aufweisen.

Da auch, wie Fig. 2 zeigt, das erfindungsgemäße Klemmelement 1 unter Formschluss an der erfindungsgemäß verwendeten Halteschiene 8 gehalten wird, werden die plattenförmigen Elemente 10, 10' auch bei von Windsogkräften bewirkten abhebenden Lasten stabil an der Halteschiene 8 gehalten, so dass das erfindungsgemäße Klemmelement 1 zusammen mit der Halteschiene ein erfindungsgemäßes Befestigungssystem für plattenförmige Elemente 10, 10' bildet. Als plattenförmige Elemente 10, 10' kommen dabei insbesondere Solarmodule wie Photovoltaik-Module und Solarthermie-Kollektoren zum Einsatz.

Zur Montage der plattenförmigen Elemente 10, 10' auf einer Unterkonstruktion, wie beispielsweise einem Dach oder einem entsprechenden Gestell, wird zunächst die Halteschiene in an sich bekannter Weise auf der Unterkonstruktion befestigt. Um die Position der plattenförmigen Module 10, 10' auf einer Seite festzulegen, wird ein Nutenstein, beispielsweise mittels Verschraubung an der Halteschiene 8 festgelegt, wobei der Nutenstein in die Nuten 9, 9' der Halteschiene 8 eingreift. Dann wird das erste plattenförmige Element 10 auf die Halteschiene 8 aufgelegt und in horizontaler Richtung an den Nutenstein herangeschoben. Dabei dringt ein Klemmmittel des Nutensteins unter Bildung eines Formschlusses in die Aufnahmenut 11' des Rahmens des plattenförmigen Elements 10 ein. Danach wird das erfindungsgemäße Klemmstück 1 auf die Halteschiene 8 aufgeclipst oder aufgeschoben und so bis zum Anschlag an das plattenförmige Element 10 herangeschoben, so dass das Klemmmittel 5 unter Formschluss in die Nut 11 des Rahmens des plattenförmigen Elements 10 vorzugsweise vollständig eingeführt ist. Danach wird das zweite plattenförmige Element 10' auf die Halteschiene 8 aufgelegt und horizontal bis zum Anschlag an das Klemmelement 1 herangeschoben. Dabei dringt das zweite Klemmmittel 5' des Klemmelements 1 in die Aufnahmenut 11' des Rahmens des zweiten plattenförmigen Elements 10' ein. Zur Montage weiterer plattenförmiger Elemente können in angegebener Weise und in abwechselnder Reihenfolge weitere Klemmelemente 1 und plattenförmige Elemente 10, 10' montiert werden. Nach der Montage des letzten plattenförmigen Elements wird die Montage wiederum durch Aufsetzen eines abschließenden Nutensteins beendet, der wiederum vorzugsweise unter Formschluss in die Aufnahmenut 11 bzw. 11' des plattenförmigen Elements 10 bzw. 10' eindringt. Der in die Aufnahmenut 11 bzw. 11' eindringende Teil des Nutensteins ist dabei vorzugsweise entsprechend dem Klemmmitteln 5, 5' des erfindungsgemäßen Klemmelements 1 ausgebildet. Alternativ zum Einsatz von Nutensteinen können auch Abschlusselemente an den beiden Enden einer Reihe von plattenförmigen Elementen 10, 10' eingesetzt werden. Derartige Abschlusselemente werden in an den Enden in die Halteschiene 8 eingeschoben, wo sie durch Arretierungsmittel (z. B. Federklemmen) fixiert werden. Die Abschlusselemente sind so ausgestaltet, dass sie die offenen Enden der Halteschiene verschließen (beispielsweise indem sie diese Enden umgreifen). An einer Seite umfassen die Abschlusselemente den Klemmmitteln 5, 5' des erfindungsgemäßen Klemmelements 1 entsprechende mindestens ein Klemmelement. Dieses Klemmelement greift beim seitlichen Heranschieben eines plattenförmigen Elements 10, 10' in die Aufnahmenut 11 des plattenförmigen Elements 10. 10' ein.

Zur Aufnahme der Schwerkraft der plattenförmigen Elemente 10, 10' dient eine weitere Halteschiene, die am unteren Rand der plattenförmigen Elemente 10, 10' angeordnet ist und an der Unterkonstruktion festgelegt ist. Diese weitere Halteschiene besitzt im Vergleich zur Halteleiste 8 ein zusätzliches Eingriffselement, das sich zumindest teilweise über die Länge der weiteren Halteleiste erstreckt und in die Aufnahmenut 11, 11' der plattenförmigen Elemente 10, 10' eingreift, die sich über zumindest drei Seiten der plattenförmigen Elemente 10, 10' erstreckt.

Bevorzugt ist die Länge der Halteschiene 8 derart gewählt, dass die Stelle des Aufeinandertreffens zweier benachbarter Halteschienen 8 mit einer Position zusammenfällt, an der das erfindungsgemäße Klemmelement 1 angeordnet ist, um zwei benachbarte plattenförmige Elemente 10, 10' an der Halteschiende 8 festzulegen. Dies ist insbesondere dann der Fall, wenn die Länge der Halteschiene in etwa der Breite eines plattenförmigen Elements plus der Länge des erfindungsgemäßen Klemmelements oder einem ganzzahligen Vielfachen dieser Summe entspricht. In einem derartigen Fall wird das erfindungsgemäße Klemmelement 1 als Verbindungselement für zwei benachbarte Halteschienen 8 bzw. zwischen zwei benachbarten Halteschienen 8 eingesetzt.

Die spezielle Ausgestaltung des erfindungsgemäßen Klemmelements ermöglicht bei werkzeugloser Montage eine stabile Befestigung von plattenförmigen Elementen wie Photovoltaik-Modulen und Solarthermie-Kollektoren an entsprechenden Halteschienen. Darüber hinaus ist das erfindungsgemäße Klemmelement einfach und kostengünstig herstellbar, beispielsweise mittels Strangpressen oder Spritzguss.

## Patentansprüche

1. Klemmelement (1) für ein Befestigungssystem für plattenförmige Elemente (10, 10'), insbesondere Solarmodule wie Photovoltaik-Module und Solarthermie-Kollektoren, auf einer Unterkonstruktion aus einem U-förmigen Profil mit einer Grundfläche (2) und zwei Stegen (3, 3'), wobei die Stege (3, 3') an ihrem von der Grundfläche (2) entfernten Ende zur Innenseite weisende Eingriffelemente (4, 4') aufweisen und an die Grundfläche an zwei einander in Längsrichtung gegenüberliegenden Enden Klemmmittel (5, 5') angeordnet sind.

2. Klemmelement (1) nach Anspruch 1, **dadurch gekennzeichnet, dass** an den Innenseiten der Stege (3, 3') jeweils mindestens ein Abstandselement (6, 6', 6", 6''') angeordnet ist.

3. Klemmelement (1) nach Anspruch 1 oder Anspruch 2, **dadurch gekennzeichnet, dass** an der den Stegen (3, 3') zugewandten Seite der Grundfläche (2) mindestens ein weiteres Abstandselement (7, 7') angeordnet ist.

4. Klemmelement (1) nach einem der Ansprüche 1 bis 3, **dadurch gekennzeichnet, dass** die Klemmmittel (5, 5') an der Innenseite verjüngend ausgebildet sind.

5. Klemmelement (1) nach Anspruch 4, **dadurch gekennzeichnet, dass** die Klemmmittel (5, 5') eine zumindest teilweise profilierte Oberfläche aufweisen.

6. Klemmelement (1) nach einem der Ansprüche 1 bis 5, **dadurch gekennzeichnet, dass** es sich bei dem Klemmelement (1) um ein Bauteil aus Aluminium, Edelstahl, einer Aluminium-Druckgusslegierung, einer Zink-Druckgusslegierung, einer Aluminium-Zink-Druckgusslegierung, Acrylnitril-Styrol-Acrylester (ASA), Polyamid (PA), Polyoxymethylen (POM) oder faserverstärkten Polymeren, insbesondere glasfaserverstärkten Polymeren, vorzugsweise um ein Bauteil aus Aluminium handelt.

7. Befestigungssystem für plattenförmige Elemente (10, 10'), insbesondere Solarmodule wie Photovoltaik-Module und Solarthermie-Kollektoren, wobei die plattenförmigen Elemente (10, 10') an zumindest zwei parallelen Seitenrändern jeweils eine Aufnahmenut (11, 11') aufweisen, auf einer Unterkonstruktion, wobei das Befestigungssystem Folgendes umfasst:
(i) mindestens eine Halteschiene (8) mit rhombischem, vorzugsweise rechteckigem Querschnitt, wobei die Halteschienen (8) auf zwei parallelen Seiten jeweils mindestens eine Nut (9, 9') aufweisen; und
(ii) mindestens ein Klemmelement (1) nach einem der vorangehenden Ansprüche,
wobei das Klemmelement 1 zwischen zwei plattenförmigen Elementen (10, 10') angeordnet ist, das U-förmige Profil des Klemmelements (1) die Halteschiene (8) derart umgreift, dass die Grundfläche (2) über einer Seite der Halteschiene (8) angeordnet ist und das Klemmelement (1) und die Eingriffelemente (4, 4') jeweils in mindestens eine der Nuten (9, 9') der Halteschiene (8) eingreifen, und wobei die Klemmmittel (5, 5') des Klemmelements (1) jeweils in eine Aufnahmenut (11, 11') eines plattenförmigen Elements (10, 10') aufgenommen sind.

8. Verwendung eines Klemmelements (1) nach einem der Ansprüche 1 bis 6 als Verbindungselement zwischen zwei benachbart angeordneten Halteschienen (8).
